# EUROPÄISCHE PATENTANMELDUNG

(11) **EP 1 512 823 A2**
(43) Veröffentlichungstag der Anmeldung: **09.03.2005**
(21) Anmeldenummer: 04019472.2
(22) Anmeldetag: 17.08.2004
(51) Int. Cl.: E05F 15/18

(54) **Linearantrieb einer Schiebetür mit codierter Absolutpositions-Messung**

(30) Priorität: 04.09.2003 DE 10341296
(71) Anmelder: DORMA GmbH + Co. KG, 58256 Ennepetal (DE)
(72) Erfinder: Hoopmann, Harald, 26655 Westerstede-Ochholt (DE); Ginzel, Lothar, 58239 Schwerte (DE)

(57) **Zusammenfassung**

Die Erfindung betrifft ein Messsystem zur Bestimmung einer absoluten Position eines sich entlang einer Schiene bewegenden Flügels einer Schiebetür mit Linearantrieb. Es ist ein sich in oder an einem Langstator befindliches Codeband vorgesehen, das über ein in oder an dem Flügel angeordnetes optisches Abtastsystem abgetastet wird. Ein Decoder bestimmt auf Grundlage eines von dem optischen Abtastsystem ausgegebenen Signales eine absolute Position des Flügels.

## Beschreibung

Die Erfindung betrifft einen Linearantrieb für eine Schiebetür mit einem Messsystem zur Bestimmung einer Wegposition der sich entlang eines Langstators bewegenden Flügel.

Die WO 00/50719 A1 beschreibt eine automatische Schiebetür, die als Linearantrieb aus einem kombinierten Lager- und Antriebssystem besteht. Der Aufbau besteht aus einem permanent erregten magnetischen Tragsystem, welches symmetrisch aufgebaut ist und ortsfeste und ortsveränderliche Magnetreihen aufweist. Die Magnetreihen sind jeweils in einer Ebene angeordnet.

Bei derartigen Schiebetüren besteht zwischen einem Langstator und den an den Flügeln befestigten Dauermagneten keine feste Verbindung, da der Flügel aufgrund der Dauermagnete und einer in dem Stator befindlichen Eisenschiene durch Abstandshalter in einem Schwebezustand gehalten wird. Somit ist eine Feststellung der Flügelposition entlang der Fahrstrecke nicht möglich, da der Einsatz eines Inkrementalgebers nicht möglich ist.

Einem solchen Lagersystem gemeinsam ist, dass es nach dem Prinzip der abstoßenden Kraftwirkung arbeitet, welches Wirkprinzip einen stabilen Schwebezustand, ohne aufwendige elektrische Regeleinrichtungen, ermöglicht. Nachteilig hieran ist jedoch, dass sowohl mindestens eine ortsfeste als auch mindestens eine ortsveränderbare Magnetreihe vorhanden sein muss, d. h. über den gesamten Weg der zu verfahrenden Strecke der automatisch verfahrbaren Flügel und an dem entlang dieser Führung beweglichen Tragschlitten für die Tür müssen Magnete angeordnet sein. Ein solches System zeichnet sich aufgrund des Wegfalls der mechanischen Reibung zum Tragen der Tür durch extreme Leichtgängigkeit und geräuschlose Arbeitsweise und nahezu verschleiß- und wartungsfreien Betrieb aus.

Es gibt Positions-Messsysteme. auf dem Markt, welche fast alle nach dem gleichen Prinzip arbeiten, dass innerhalb eines Sensors Umdrehungen auf einer Codierscheibe oder Striche von einem Codeband abgetastet und über eine Recheneinheit auf die Position umgeformt werden. Hierbei wird allgemein ein von einem Nullpunkt gefahrener Weg anhand einer von dem Sensor abgegebenen Anzahl von Pulsen ermittelt, wodurch die Position aus dem Nullpunkt und dem zurückgelegten Weg, d. h. relativ zu dem Nullpunkt, bestimmt werden kann. Bei diesem Verfahren ist jedoch nachteilig, dass die Anzahl der Pulse entweder nicht flüchtig zwischengespeichert werden muss oder die Position mit einem Stromausfall verloren geht, wodurch der/die Flügel für eine neue Positionierung erst wieder in die Nulllage, d. h. auf oder zu, gefahren werden müssten.

Es ist daher Aufgabe der vorliegenden Erfindung, einen Linearantrieb für Schiebetüren mit einem Messsystem zur Bestimmung einer Position der sich entlang einer Schiene verfahrbaren Flügel zu schaffen, bei dem die zuvor beschriebenen Nachteile nicht auftreten.

Diese Aufgabe wird durch ein Messsystem mit den im Patentanspruch 1 angegebenen Merkmalen gelöst.

Das erfindungsgemäße Messsystem ist demnach mit einem sich in oder an einer Schiene oder des Langstators befindlichen Codeband, das eine absolute Position anzeigt, einem in oder an dem Flügel angeordneten optischen Abtastsystem, welches das Codeband abtastet, und einem Decoder ausgestattet, der auf Grundlage eines von dem optischen Abtastsystem ausgegebenen Signales eine absolute Position des Flügels bestimmt. Hierdurch wird eine besondere Flexibilität geschaffen, da jede Stellung eines einzelnen Flügels jederzeit ermittelt werden kann, ohne eine Nullpunkt-Indizierung vornehmen zu müssen oder neben dem Messsystem andere mechanische Hilfsmittel vorzusehen. Dies wird insbesondere dadurch erreicht, dass das Codeband nicht lediglich Striche in einem bestimmten Abstand aufweist, die bei dem Verfahren der Flügel zu von dem Sensor abgegebenen Pulsen führen, sondern eine absolute Position anzeigt, die auch nach einem Stromausfall direkt abgelesen und ausgewertet werden kann.

Erfindungsgemäß ist der Decoder vorzugsweise in oder an dem Flügel angeordnet. Diese zu der alternativen Ausführungsform der Anordnung des Decoders in einem stationär, z. B. in einem Steuergerät, angeordneten Decoder hat den Vorteil, dass die von dem Sensor ausgegebenen Signale nicht z. B. über die Schiene (Stator), entlang der sich der Flügel bewegt, übertragen werden müssen, sondern eine Auswertung des an oder in dem sich bewegenden Flügel erzeugten Sensorsignales direkt an oder in dem Flügel erfolgen kann. Jetzt ist lediglich eine Übertragung der ausgewerteten absoluten Position an eine stationäre Steuerung erforderlich, die jedoch aufgrund des einfacheren Signales in Bezug auf das Sensorausgangssignal auch einfacher übermittelt werden kann.

Das Codeband besteht vorzugsweise aus einem selbstklebenden Streifen. Hierdurch kann das erfindungsgemäße Messsystem in einer besonders einfachen Weise installiert oder bei bestehenden Systemen nachgerüstet werden. Das optische Abtastsystem kann hierfür vorzugsweise zusammen mit dem Decoder als Baueinheit an dem Flügel befestigt und über den Flügel mit Strom versorgt werden. Die von dem Decoder ausgegebenen Signale können dann z. B. moduliert auf der Stromleitung oder über eine zusätzliche Datenschiene an die stationäre Steuerung übermittelt werden und das ansonsten schwierig zu montierende und zu justierende Codeband kann einfach entlang der Schiene oder auf die Schiene (Stator) aufgeklebt werden.

Nach der Erfindung erstreckt sich das Codeband vorzugsweise über die gesamte Länge der Schiene. Hierdurch sind nicht nur bestimmte Bereiche der Schiene, sondern der gesamte Verfahrweg der Flügel hinsichtlich ihrer absoluten Position erfassbar.

In einer ersten erfindungsgemäßen Ausführungsform enthält das Codeband fortlaufende Zeichen oder Zeichenkombinationen. In dieser Ausführungsform ist eine durch das Codeband angezeigte absolute Position auch für Menschen ohne weitere Hilfsmittel leicht eindeutig identifizierbar. Weiter vorzugsweise wiederholen sich die Zeichen oder Zeichenkombinationen über die Länge des Codebandes nicht, damit von dem Codeband eine absolute Position eindeutig und ohne Auswertung mehrerer Zeichen oder Zeichenkombinationen angezeigt wird. Dieses bedeutet, dass die Zeichen oder Zeichenkombinationen nur einmal über die gesamte Länge der Schiene vorhanden sind.

Das erfindungsgemäße Messsystem kann als optisches Abtastsystem eine CCD-Kamera umfassen. Durch diese CCD-Kamera kann insbesondere eine in der zuvor beschriebenen ersten bevorzugten Ausführungsform auf dem Codeband fortlaufende Zeichenkombination leicht erfasst und durch eine entsprechende Verarbeitung ausgewertet werden. Hier ist es z. B. auch denkbar, dass das Codeband aus einem selbstklebenden Maßband besteht, das über eine Bilderfassung mittels der CCD-Kamera ausgewertet wird.

Erfindungsgemäß ist auf dem Codeband vorzugsweise wenigstens ein Justierstreifen vorgesehen. Durch einen solchen Justierstreifen können auf dem Codeband vorgesehene fortlaufende Zeichen oder Zeichenkombinationen oder andere die absolute Position anzeigende Elemente leichter identifiziert werden, da deren relative Position zu dem Justierstreifen bekannt ist.

In einer zweiten vorzugsweisen Ausführungsform der Erfindung weist das Codeband einen Binärcode auf, der weiter vorzugsweise ein Gray-Code ist. Der Binärcode ist vorzugsweise aus dunklen Streifen auf hellem Grund bzw. nicht reflektierenden Streifen auf reflektierendem Grund aufgebaut. Vorteilig an einem solchen Code ist, dass sich pro fortschreitendem Positionswert z. B. nur 1 Bit ändern braucht und dass ein solcher Code in der automatisierten Auswertung allgemein einfacher und fehlerunanfälliger ist, als für Menschen ohne weitere Hilfsmittel leicht eindeutig identifizierbare Zeichen oder Zeichenkombinationen.

In dieser zweiten Ausführungsform der Erfindung besteht der Binärcode vorzugsweise aus einem Balken einer bestimmten Punktbreite, der weiter vorzugsweise zwischen zwei Justierstreifen angeordnet ist.

Weiter umfasst das optische Abtastsystem in dieser zweiten erfindungsgemäßen Ausführungsform vorzugsweise einen Zeilensensor und weiter vorzugsweise eine Beleuchtungsquelle zur Beleuchtung des Codebandes. Hierdurch kann erfindungsgemäß ein optischer Lowcost-Linearsensor verwendet werden, der pro Aufnahme z. B. einen senkrechten Balken mit z. B. 100 Pixeln einliest und diese Daten an einen Prozessor weitergibt, der daraus die Position ermittelt.

Eine automatische Schiebetür, die auch als Bogenschiebetür ausgeführt sein kann, nach der Erfindung mit mindestens einem sich entlang einer Schiene bewegenden Flügel weist ein erfindungsgemäßes Messsystem in oder an jedem Flügel auf. Ein erfindungsgemäßer Flügel einer Schiebetür mit entlang einer Schiene bewegenden Flügeln weist ein Messsystem nach der Erfindung auf.

Weitere Einzelheiten, Merkmale und Vorteile der Erfindung ergeben sich aus der nachfolgenden Beschreibung eines bevorzugten Ausführungsbeispieles anhand der Zeichnungen.

Es zeigen:
- Figur 1:: Einen Ausschnitt eines Linearantriebes,
- Figur 2:: eine Prinzipdarstellung des erfindungsgemäßen Messsystemes, welches in einen erfindungsgemäßen Flügel integriert ist und
- Figur 3:: eine Prinzipdarstellung des erfindungsgemäßen Messsystemes, das einen Binärcode abtastet.

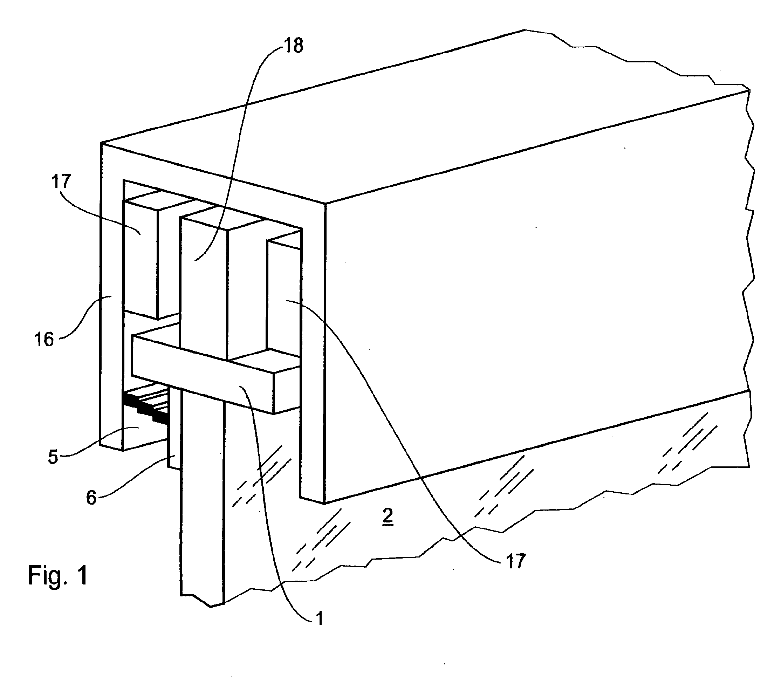

Eine beispielhafte Ausführung eines Linearantriebes wird in der Figur 1 wiedergegeben. Eine an einem Tragschlitten 1 befestigte Magnetreihe 18 wird durch eine an dem Tragschlitten 1 vorgesehene Abstandshaltung in horizontaler Richtung zentriert und innerhalb eines Langstators 16 zwangsgeführt Dabei befinden sich vorzugsweise zu beiden Seiten der Magnetreihe 18 Elektromagnete 17, die nacheinander bestromt werden. An dem Tragschlitten 1 ist gleichzeitig mindestens ein verschiebbarer Flügel 2 gehaltert. Dieses können auch mehrere Flügel sein, insbesondere bei einer Teleskoptür. Ferner ist an dem Tragschlitten 1 ein Abtastsystem 6 installiert. An dem Langstator 16 ist im Inneren im Bereich des Abtastsystemes 6 ein Codeband 5 befestigt, das parallel zur Tragschiene 1 verläuft. Der Langstator 16 wird durch eine Steuerung 8 bestromt.

Bei dem Linearantrieb kann es sich, wie beim Stand der Technik, um ein kombiniertes Trag- und Fahrsystem oder nur um ein Fahrsystem handeln. Bei derartigen Systemen ist kein fester Kontakt zwischen den verschiebbaren Flügeln 2 und dem Langstator 16 gegeben, so dass auch z. B. mit einem Inkrementalgeber nicht die genaue Position des Flügels 2 ermittelt werden kann. Dieses ist aber von Bedeutung, wenn nur bestimmte Öffnungsweiten des/der Flügel(s) 2 angefahren werden sollen. Ferner sollte die genaue Position des Flügels 2 nach einem Stromausfall bekannt sein. Ein Linearantrieb mit dem nachfolgend beschriebenen Ausführungsbeispiel einer Schiebetür braucht keine Lernfahrt nach einem Stromausfall durchführen, da aufgrund des Messsystemes eine absolute Position jederzeit entlang der Schiene bestimmt werden kann.

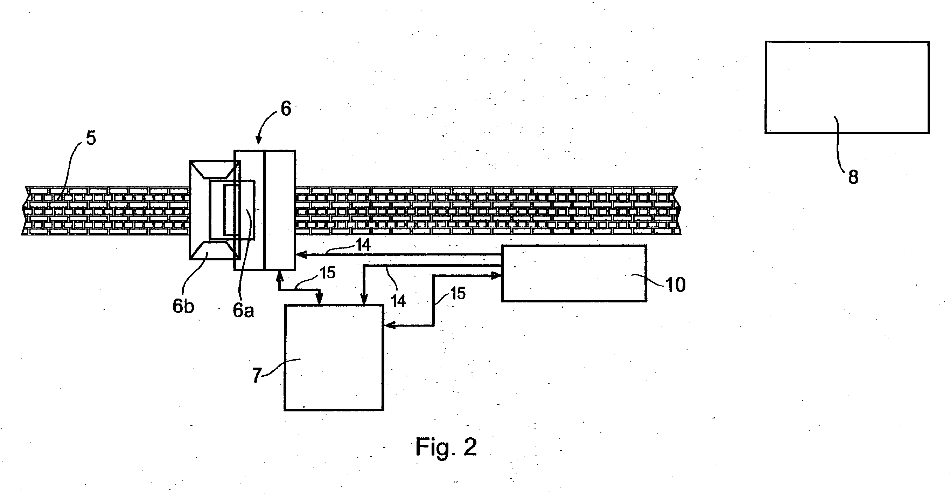

Die Figur 2 zeigt einen Teil des prinzipiell in Figur 1 dargestellten Linearantriebes in einer schematischen vergrößerten Ansicht. Es ist zu erkennen, dass parallel zu dem Flügel 2 das Codeband 5 innerhalb des Langstators 16 verläuft, welches von dem Abtastsystem 6 an dem Flügel 2 abgetastet wird. Das Abtastsystem 6 besteht aus einer optischen Linse 6b und einem optischen Sensor 6a und ist zur Übertragung von Daten 15 mit einem Decoder 7 verbunden, der z. B. ein Signalprozessor zur Dekodierung der absoluten Position über fest codierte. Muster oder fortlaufende Strichcode sein kann. Weiter empfängt das Abtastsystem 6 eine Versorgungsspannung 14 von einer Spannungsversorgungs-/Datenaustauscheinheit 10, die innerhalb des Flügels 2 angeordnet und mit den Stromleitern verbunden ist, um über diese an die von einer Steuereinheit 8 gegebene Versorgungsspannung 14 angeschlossen zu werden, um mit der Steuereinheit 8 Daten 15 auszutauschen. Der Decoder 7 erhält seine Versorgungsspannung 14 ebenfalls von dieser Spannungsversorgungs-/Datenaustauscheinheit 10. Der hier als Signalprozessor ausgebildete Decoder 7 ist zum Zwecke des Datenaustausches mit der Steuerung 8 verbunden.

Über das optische Abtastsystem 6 wird das sich an der Laufstrecke befindliche Codeband 5 mit Hilfe des Decoders 7 entschlüsselt und damit die jeweilige Position des Flügels 2 eindeutig und zu jeder beliebigen Zeit ermittelt. Das Codeband 5 besteht vorzugsweise aus einem selbstklebenden Streifen, der fortlaufende Zeichen, wie Zahlen und/oder Buchstaben, enthält, und der auf der ganzen Länge der Verfahrstrecke angebracht ist. Die Zeichenkombinationen wiederholen sich vorzugsweise nicht. Diese Zeichen werden in einer ersten Ausführungsform während des Verfahrens der Flügel, z. B. des Flügels 2, über z. B. eine CCD-Kamera aufgenommen, die den Sensor 6a des optischen Abtastsystemes 6 bilden kann, und innerhalb des den Decoder 7 bildenden digitalen Signalprozessors decodiert, d. h. es wird von dem digitalen Signalprozessor die Position des Flügels 2 bestimmt.

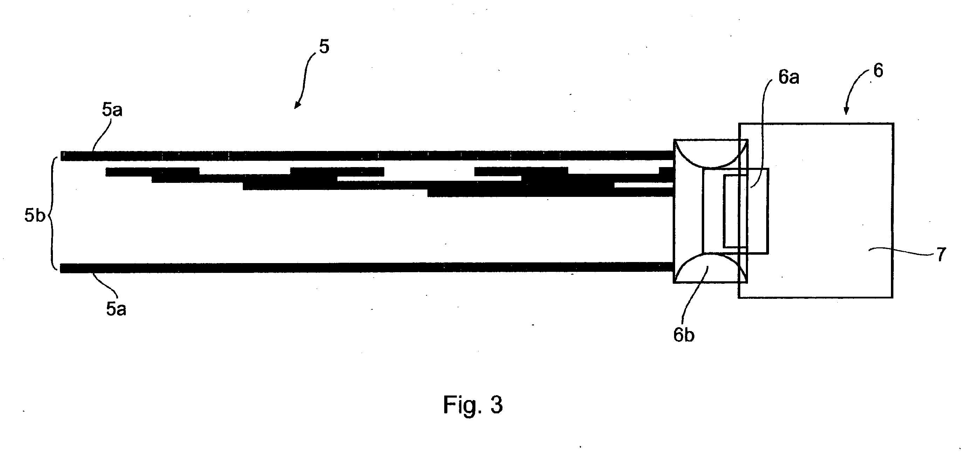

Die Figur 3 zeigt eine alternative Ausführungsform des Codebandes 5, für die als Sensor 6a ein Linearsensor verwendet werden kann, der als Binärcode 5b die ausgebildete Positionsinformation des Codebandes 5 abtastet. Hierbei kann die Linse 6b z. B. eine Plexiglasoptik sein, die das Code-Abbild auf der Sensorfläche zentriert und eine gewisse Fokussierung erreicht, die auch bei schwankendem Abstand des zumindest den Sensor 6a und die Linse 6b tragenden Lesekopfes zum Codeband 5 eine exakte Auswertung der Daten ermöglicht. Eine solche Kunststoff-Optik kann z. B. auf den Linearsensor 6a aufgeclipst werden. Weiter ist in dieser in Figur 3 gezeigten Ausführungsform der Decoder 7 direkt mit dem als Linearsensor ausgebildeten Sensor 6a verbunden.

Die in Figur 3 gezeigte zweite bevorzugte Ausführungsform gemäß der Erfindung ist in Bezug auf die zuvor beschriebene erste Ausführungsform, welche eine CCD-Kamera enthält, günstiger, da ein hierbei verwendbarer optischer Lowcost-Linearsensor, z. B. pro Aufnahme, einen senkrechten Balken mit z. B. 100 Pixeln einlesen und diese Daten seriell an einen als Decoder 7 wirkenden Prozessor weitergeben kann, der daraus die Position ermittelt.

Das Codeband 5 besteht dafür aus einem Binärcode, der z. B. mit schwarzen Streifen auf weißem Grund aufgebaut ist. Als relativ fehlertolerant hat sich dabei der Gray-Code erwiesen, bei dem sich pro fortschreitendem Wert nur 1 Bit ändert.

Das Codeband 5 wird vorzugsweise mittels einem Paar (nicht gezeigter) IR-Dioden beleuchtet, damit jederzeit eine definierte Lichtmenge auf den Sensor reflektiert wird. Auf beiden Seiten des Codes, z. B. unter- und oberhalb des Codes, sind Justierstreifen 5a aufgebracht, deren Breite und Abstand eine genaue Lokalisierung der einzelnen Bits ermöglicht.

Die eingelesenen Datenworte werden von beiden Seiten her auf ihre Minimalwerte untersucht, um die Justierstreifen 5a zu finden. Hierdurch wird gleichzeitig der Abstand der Justierstreifen 5a als eingelesener Pixelwert erhalten und die restlichen erfassten Pixel können durch die Anzahl der zur Codierung verwendeten Bits geteilt werden, um die jeweils zu einem Bit zugehörigen Pixel zu ermitteln. Aus den Bit-Pixeln werden die zwei oder vier mittleren gewichtet und daraus das entsprechende Bit entschlüsselt.

Das Positionswort wird z. B. über eine Datenschiene oder z. B. moduliert auf den Stromleitern an die Steuerung 8 übermittelt. Die Steuerung 8 kann jedem Flügel eine anzufahrende Position mitteilen.

Die Flügel können auch in eine gewünschte Position verfahren werden, die dann z. B. per Knopfdruck abgespeichert wird und von der Steuerung 8 als Sonderstellung immer wieder aufgebaut werden kann. Je nach dem Speicherplatz in der Steuerung 8 sind somit vielseitige Gestaltungsmöglichkeiten, ohne Änderung der Anlage, möglich. Es ist auch denkbar, die Eingabe neuer Stellungen zu ermöglichen, indem diese von Hand aufgebaut und über ein Bedientableau der Steuerung 8 als Sonderstellung abgespeichert werden.

Mit einem solchen Messsystem können Schiebetüren aller Bauart ausgestattet werden.

### Bezugszeichenliste

- 1: Tragschlitten
- 2: Flügel
- 5: Codeband
- 5a: Justierstreifen
- 5b: Binärcode auf dem Codeband 5
- 6: Abtastsystem
- 6a: Sensor des Abtastsystemes
- 6b: Linse des Abtastsystemes
- 7: Decoder
- 8: Steuerung
- 10: Spannungsversorgungs-/Datenaustauscheinheit eines Elementes
- 14: Versorgungsspannung
- 15: Daten
- 16: Langstator
- 17: Elektromagnet
- 18: Dauermagnet

## Patentansprüche

1. Linearantrieb einer Schiebetür mit einem Messsystem zur Positionsbestimmung, mit einem Langstator (16), in dem Elektromagnete (17) angeordnet sind, zwischen denen Dauermagnete (18) eines Tragschlittens (1) mindestens eines sich entlang des Fahrweges bewegenden Flügels (2) eintauchen, **dadurch gekennzeichnet, dass** das Messsystem ein Messsystem zur Bestimmung einer absoluten Position des Flügels (2) ist.

2. Messsystem nach Anspruch 1, **dadurch gekennzeichnet, dass** sich in oder an dem Langstator (16) ein Codeband (5) befindet und ein in oder an dem Flügel (2) angeordnetes optisches Abtastsystem (6), welches das Codeband (5) abtastet, und einen Decoder (7), der auf Grundlage eines von dem optischen Abtastsystem (6) ausgegebenen Signales eine absolute Position des Flügels (2) bestimmt.

3. Messsystem nach Anspruch 1, **dadurch gekennzeichnet, dass** der Decoder (7) in oder an dem Flügel (2) angeordnet ist.

4. Messsystem nach einem der vorstehenden Ansprüche, **dadurch gekennzeichnet, dass** das Codeband (5) aus einem selbstklebenden Streifen besteht.

5. Messsystem nach einem der vorstehenden Ansprüche, **dadurch gekennzeichnet, dass** sich das Codeband (5) über die gesamte Länge des Langstators (16) erstreckt.

6. Messsystem nach einem der vorstehenden Ansprüche, **dadurch gekennzeichnet, dass** auf dem Codeband (5) fortlaufende Zeichen oder Zeichenkombinationen enthalten sind.

7. Messsystem nach Anspruch 5, **dadurch gekennzeichnet, dass** sich die Zeichen oder Zeichenkombinationen über die Länge des Codebandes (5) nicht wiederholen.

8. Messsystem nach einem der vorstehenden Ansprüche, **dadurch gekennzeichnet, dass** das optische Abtastsystem (6) eine CCD-Kamera umfasst.

9. Messsystem nach einem der vorstehenden Ansprüche, **dadurch gekennzeichnet, dass** auf dem Codeband (5) wenigstens ein Justierstreifen vorgesehen ist.

10. Messsystem nach einem der vorstehenden Ansprüche, **dadurch gekennzeichnet, dass** das Codeband (5) einen Binärcode, vorzugsweise einen Gray-Code, aufweist.

11. Messsystem nach Anspruch 9, **dadurch gekennzeichnet, dass** der Binärcode aus einem Balken einer bestimmten Punktbreite besteht.

12. Messsystem nach einem der Ansprüche 9 oder 10, **dadurch gekennzeichnet, dass** das optische Abtastsystem (6) einen Zeilensensor umfasst.

13. Messsystem nach einem der Ansprüche 9 bis 11, **dadurch gekennzeichnet, dass** das optische Abtastsystem (6) wenigstens eine Beleuchtungsquelle zur Beleuchtung des Codebandes (5) umfasst.
